# EUROPÄISCHE PATENTSCHRIFT

(11) **EP 3 471 068 B1**
(45) Veröffentlichungstag und Bekanntmachung des Hinweises auf die Patenterteilung: **25.03.2026**
(21) Anmeldenummer: 18198121.8
(22) Anmeldetag: 02.10.2018
(51) Int. Cl.: G07C 9/28, G06F 21/62, G07C 9/25

(54) **VERTEILTES SYSTEM ZUM VERWALTEN VON PERSONENBEZOGENEN DATEN, VERFAHREN UND COMPUTERPROGRAMMPRODUKT**
DISTRIBUTED SYSTEM FOR MANAGING PERSONAL INFORMATION, METHOD AND COMPUTER PROGRAM PRODUCT
SYSTÈME DISTRIBUÉ DE GÉNÉRATION DES DONNÉES À CARACTÈRE PERSONNEL, PROCÉDÉ ET PRODUIT PROGRAMME INFORMATIQUE

(30) Priorität: 13.10.2017 DE 102017123931
(43) Veröffentlichungstag der Anmeldung: 17.04.2019
(73) Patentinhaber: Bundesdruckerei GmbH, 10969 Berlin (DE)
(72) Erfinder: WILKE, Andreas, 13509 Berlin (DE); FLORIAN, Martin, 13357 Berlin (DE); KOMAROV, Ilya, 13507 Berlin (DE)
(74) Vertreter: Patentship Patentanwaltsgesellschaft mbH

(56) Entgegenhaltungen:
- EP-A1- 2 977 925
- EP-A2- 0 990 756
- US-A1- 2009 228 980
- US-A1- 2014 101 453

## Beschreibung

An geschützten Bereichen, wie beispielsweise Sicherheitsschleusen von zu sichernden Gebäuden, wie wissenschaftlichen Einrichtungen oder Firmengebäuden, finden häufig Personenauthentifizierungen statt. Hierzu werden personenbezogene Daten, wie beispielsweise ein Personalausweis, aber auch elektronische Daten wie ein Token erfasst. Diese erfassten Daten werden typischerweise anonymisiert und gespeichert.

Die Offenlegungsschrift US 2014/101453 A1 offenbart eine biometrische Authentifizierungsvorrichtung.

Die Offenlegungsschrift EP 0 990 756 A2 offenbart ein Zugangskontrollsystem.

Die Offenlegungsschrift US 2009/228980 A1 offenbart ein System zum Detektieren eines anomalen Zugriffsevents.

Die Druckschrift EP 2 977 925 A1 beschreibt ein mobiles Terminal zum Erfassen von biometrischen Daten eines Nutzers.

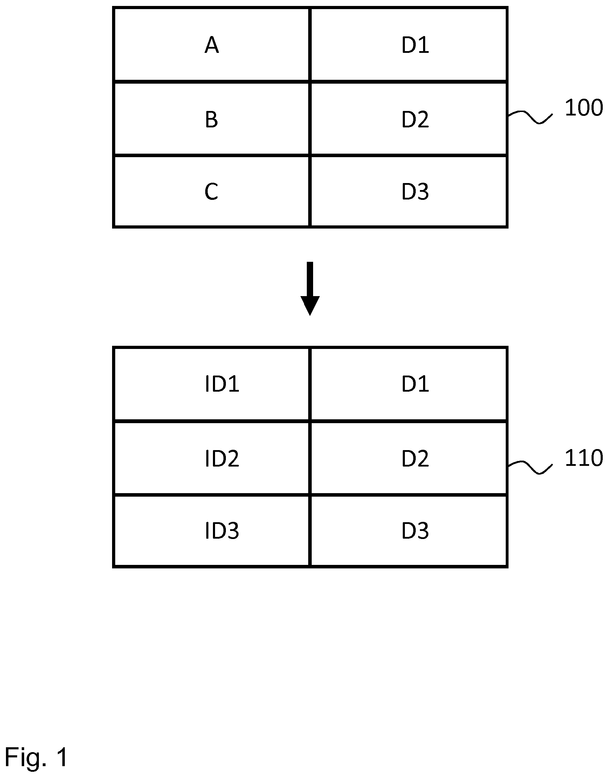

Fig. 1 zeigt schematisch eine Methode, derartige Daten zu anonymisieren. Im Block 100 sind personenbezogene Daten D1, D2, D3 nicht anonymisierten Personen A, B, C zugeordnet. Diese Daten können durch eine Erfassungsvorrichtung, wie einen Scanner für biometrische und/oder elektronische Daten erfasst worden sein. Für eine Anonymisierung werden diese Daten an eine zentrale Stelle, z. B. an einen Server, gesendet. An dem Server werden dann, wie in Block 110 dargestellt, die personenbezogenen Daten D1, D2, D3 zufälligen Pseudonymen, also Identitäten ID1, ID2, ID3 zugeordnet. Durch das Senden der personenbezogenen Daten D1, D2, D3 zur Anonymisierung der personenbezogenen Daten D1, D2, D3 an die zentrale Stelle kann eine berechtigte oder unberechtigte dritte Person die personenbezogenen Daten D1, D2, D3 nicht anonymisiert abgreifen und verarbeiten. Dies kann zu einem Eingriff in die Privatsphäre der Personen A, B, C, die authentifiziert wurden, führen.

Der Erfindung liegt die Aufgabe zugrunde, ein verbessertes Konzept zum Verwalten von personenbezogenen Daten aufzuzeigen.

Die Aufgabe wird gemäß einem ersten Aspekt durch ein System zum Verwalten von personenbezogenen Daten gemäß Anspruch 1 gelöst.

Ein zweiter Aspekt betrifft ein Verfahren zum Verwalten von personenbezogenen Daten gemäß Anspruch 11. Das System weist eine erste Sicherheitseinrichtung und eine zweite Sicherheitseinrichtung auf, die räumlich getrennt angeordnet sind und die jeweils dazu eingerichtet sind, personenbezogene Daten zu erfassen und die erfassten personenbezogenen Daten Identitäten zuzuordnen. Das System weist des Weiteren ein Verwaltungssystem auf, das dazu eingerichtet ist, Berechtigungen zu den Identitäten zu verwalten. Die erste Sicherheitseinrichtung und die zweite Sicherheitseinrichtung anonymisieren jeweils die erfassten personenbezogenen Daten und lassen jeweils einen Zugriff auf die personenbezogenen Daten zu, wenn eine Berechtigung zum Zugriff auf personenbezogene Daten vorliegt, die der Identität zugeordnet ist, die den personenbezogenen Daten zugeordnet ist.

Das System kann ein Authentifizierungssystem sein. Teile des Systems sind räumlich getrennt angeordnet, das heißt, das System ist auf unterschiedliche Standorte, sogenannte Knoten, aufgeteilt. Bei den unterschiedlichen Standorten handelt es sich beispielsweise um verschiedene Eingänge eines Gebäudes oder unterschiedliche Vereinzelungsanlagen an einem Eingang des Gebäudes. Das System kann Sicherheitseinrichtungen, insbesondere eine erste und eine zweite Sicherheitseinrichtung, an den unterschiedlichen Standorten bereitstellen. Die personenbezogenen Daten werden am jeweiligen Standort durch die erste und die zweite Sicherheitseinrichtung jeweils lokal anonymisiert und gegebenenfalls verarbeitet. Durch die Aufteilung der Sicherheitseinrichtungen auf die unterschiedlichen Standorte wird ein dezentrales Netzwerk realisiert. Hierdurch werden personenbezogene Daten nicht unanonymisiert weitergeleitet. Durch dieses dezentrale System wird eine Datensicherheit gewonnen, im Vergleich zu einer zentralen Verarbeitung, wie zu Fig. 1 beschrieben.

Das erfindungsgemäße System umfasst eine erste und eine zweite Sicherheitseinrichtung. Jede Sicherheitseinrichtung kann unterschiedliche Erfassungseinrichtungen zum Erfassen personenbezogener Daten aufweisen. Die Sicherheitseinrichtungen können hierbei Scanner umfassen, die personenbezogene

Daten erfassen können. Die Sicherheitseinrichtungen sind dazu eingerichtet, personenbezogene Daten, wie beispielsweise biometrische Daten und/oder elektronische Daten und/oder Eingaben, zu erfassen. Beispielsweise umfasst eine Sicherheitseinrichtung einen Iris-Scanner zum Erfassen einer Iris, einen weiteren Scanner zum Erfassen anderer biometrischer Daten, ein Funkmodul zum Erfassen von elektronischen Daten eines Chips, wie einem Token. Alternativ oder zusätzlich kann die Sicherheitseinrichtung ein Eingabefeld zum Erfassen einer alphanumerischen Zeichenfolge aufweisen.

Eine Identität ist einer Person zugeordnet. Eine Identität umfasst hierbei einen zu einer Person gehörenden Datensatz personenbezogener Daten. Zu jeder Identität können Berechtigungen vorliegen und verwaltet werden. Die Verwaltung wird durch ein Verwaltungssystem ausgeführt.

Die Anonymisierung der personenbezogenen Daten lokal an dem Knoten, an dem sie erfasst wurden, verhindert eine nicht anonymisierte Weiterleitung der personenbezogenen Daten an eine zentrale Stelle, an der unberechtigte Dritte Zugriff auf die nicht anonymisierten personenbezogenen Daten haben könnten.

Gemäß einer vorteilhaften Ausgestaltung sind die erste Sicherheitseinrichtung und die zweite Sicherheitseinrichtung mit einem Datennetzwerk verbunden. Sie sind dazu eingerichtet, personenbezogene Daten in Abhängigkeit der verwalteten Berechtigungen für einen Zugriff über das Datennetzwerk bereitzustellen.

Ein derartiges Datennetzwerk, wie beispielsweise ein lokales Datennetzwerk (LAN) oder ein anderes Datennetzwerk (zum Beispiel WAN oder Internet), schafft ein dezentrales Netzwerk mit Verbindungen zwischen den einzelnen Knoten. Das System kann auch mit einer zentralen Stelle verbunden sein, wie beispielsweise einem Server-Computersystem.

Erfindungsgemäß speichern die erste Sicherheitseinrichtung und die zweite Sicherheitseinrichtung jeweils die personenbezogenen Daten in Abhängigkeit der verwalteten Berechtigungen lokal.

Die lokale Speicherung der personenbezogenen Daten macht einen Verzicht auf eine Speicherung von erfassten personenbezogenen Daten in einer zentralen Datenbank oder an anderen Standorten des Datennetzwerks möglich. Hierdurch wird eine Datensicherheit des Systems erhöht, da nicht alle in dem System gespeicherten personenbezogenen Daten von einem unberechtigten Dritten an einem einzigen Standort abgegriffen werden können.

Gemäß der erfindungsgemäßen Ausgestaltung erfolgt eine Auswertung der personenbezogenen Daten in Abhängigkeit der verwalteten Berechtigungen.

Verwaltete Berechtigungen werden durch die Identitäten selbst bestimmt. Eine Person kann also zu ihrer Identität Berechtigungen vergeben und hinterlegen. Eine Berechtigung kann eine Auswertung, wie eine Weiterleitung zu Statistikzwecken, der personenbezogenen Daten betreffen, beispielsweise die Auswertung der personenbezogenen Daten verbieten. In diesem Fall sind die erste Sicherheitseinrichtung und die zweite Sicherheitseinrichtung nicht berechtigt, die personenbezogenen Daten auszuwerten. Das heißt, fehlt eine Berechtigung, ist keine Sicherheitseinrichtung des Systems berechtigt, die Aktion auszuführen, zu der die Berechtigung fehlt. Hierdurch wird einer Person, d. h. einer Identität, die Möglichkeit gegeben, Kontrolle über die zur Identität gehörenden personenbezogenen Daten zu erlangen.

Gemäß einer weiteren vorteilhaften Ausgestaltung umfassen die Berechtigungen Rechte zum Speichern und/oder Freigeben der personenbezogenen Daten.

Hierdurch werden die Rechte einer Identität weiter erhöht, da die Identität festlegen kann, ob ein Speichern oder ein Freigeben der personenbezogenen Daten erfolgen darf. Die Berechtigungen können eine Speicherung und/oder eine Freigabe der personenbezogenen Daten umfassen, die dieser Identität zugeordnet sind. Eine Freigabe von personenbezogenen Daten umfasst beispielsweise ein Senden oder ein Freigeben der personenbezogenen Daten an ein anderes Computersystem wie eine andere Sicherheitseinrichtung.

Erfindungsgemäß ist das Verwaltungssystem dazu eingerichtet, Informationen über die Berechtigungen der ersten Sicherheitseinrichtung und/oder der zweiten Sicherheitseinrichtung bereitzustellen.

Hierbei werden die Berechtigungen durch das Verwaltungssystem verwaltet und den einzelnen Sicherheitseinrichtungen zur Verfügung gestellt. Somit kann das Verwaltungssystem zentral oder dezentral die Berechtigungen verwalten, und die Sicherheitseinrichtungen können die Berechtigungen unabhängig von ihren lokalen Datensätzen verwenden.

Gemäß einer vorteilhaften Ausgestaltung ist das Verwaltungssystem dazu eingerichtet, Informationen über die Berechtigungen von bestimmten Identitäten bereitzustellen.

Hierdurch können einzelne Identitäten, z. B. Systemadministratoren oder Personalangestellte, Datensätze mit personenbezogenen Daten einzelner Identitäten je nach Berechtigung abfragen und verarbeiten.

Gemäß einer vorteilhaften Ausgestaltung ist das Verwaltungssystem dazu eingerichtet, die Berechtigungen basierend auf einer Erlaubnis einer Identität zu verwalten.

Die Verwaltung der Berechtigungen kann hierbei durch jede Identität separat festgelegt werden. D. h., jede Person, die eine Identität hinterlegt hat, also eine Person, die das System benutzt oder verwaltet, kann Berechtigungen bezüglich der personenbezogenen Daten, die ihre eigene Identität betrifft, separat festlegen. Dies erhöht die Rechte der Person, die der Identität zugehörig ist, da sie selber Freigaben und Verbote festlegen kann.

Gemäß einer vorteilhaften Ausgestaltung wird das Verwaltungssystem auf der ersten Sicherheitseinrichtung und der zweiten Sicherheitseinrichtung ausgeführt.

Das Verwaltungssystem kann aber auch auf jeder Sicherheitseinrichtung des Systems lokal ausgeführt werden. Somit kann jede Sicherheitseinrichtung an dem lokalen Knoten die Berechtigungen lokal abfragen. Zusätzlich können die Verwaltungssysteme, die auf den Sicherheitseinrichtungen ausgeführt werden, untereinander kommunizieren, beispielsweise über eine Datennetzwerkverbindung, so dass die Berechtigungen zwischen den auf den unterschiedlichen Standorten ausgeführten Verwaltungssystemen ausgetauscht und abgeglichen werden können. Alle Berechtigungen können so jeder Sicherheitseinrichtung bereitgestellt werden und sind somit an jedem Standort abrufbar.

Gemäß einer alternativen Ausgestaltung wird das Verwaltungssystem auf einem Computersystem ausgeführt, das von der ersten Sicherheitseinrichtung und/oder der zweiten Sicherheitseinrichtung verschieden ist. Das Computersystem ist hierbei mit der ersten Sicherheitseinrichtung und bzw. oder der zweiten Sicherheitseinrichtung über eine Datennetzwerkverbindung verbunden.

Eine derartige Anordnung und ein derartiger Betrieb des Verwaltungssystems kann eine Wartung des Verwaltungssystems, beispielsweise über eine zentrale Stelle oder einzelne Knotenpunkte, erleichtern. Die Funktion des Verwaltungssystems im Betrieb entspricht der Funktion des Verwaltungssystems, das auf den einzelnen Sicherheitseinrichtungen lokal ausgeführt wird. Ein zentrales Ausführen des Verwaltungssystems auf dem genannten Computersystem ist möglich, da das Verwaltungssystem lediglich Verwaltungsdaten, wie Berechtigungen und Identitäten umfasst, nicht jedoch die personenbezogenen Daten, die lokal bei den Sicherheitseinrichtungen gespeichert sind.

Gemäß einer vorteilhaften Ausgestaltung sind die erste Sicherheitseinrichtung und die zweite Sicherheitseinrichtung jeweils dazu eingerichtet, ein normales Verhalten einer Person anhand der ihrer Identität zugeordneten erfassten personenbezogenen Daten und hiervon abweichende Anomalien zu erkennen.

Eine Person, beispielsweise ein Angestellter in einem Bürobetrieb, betritt während eines normalen Verhaltens jeden Morgen an einem Arbeitstag das Gebäude und verlässt das Gebäude am Abend wieder. Ein derartiges Verhalten bei der Benutzung der Sicherheitseinrichtungen kann anonymisiert zur Identität der Person detektiert werden. Hieraus lässt sich für jede Identität, d. h. also anonymisiert, zu jeder Person ein Benutzungsverhalten herleiten, das als normal angesehen werden kann.

Eine Anomalie kann ein Abweichen von diesem normalen Benutzungsverhalten oder auch unerwartete Ereignisse bei einer Benutzung des Systems sein, wie beispielsweise fehlerhafte Authentifizierungsversuche. Durch die Erkennung eines normalen Verhaltens oder einer hiervon abweichenden Anomalie kann die Datensicherheit und die Gebäudesicherheit des Systems erhöht werden. Beispielsweise kann bei Erkennen einer Anomalie ein erhöhtes Sicherheitsmerkmal abverlangt oder ein Alarm des Systems ausgelöst werden.

Gemäß einer vorteilhaften Ausgestaltung ist eine Anomalie anhand von Vergleichsdaten bestimmbar, die der jeweiligen Sicherheitseinrichtung lokal oder über eine Datennetzwerkverbindung zur Verfügung stehen.

Vergleichsdaten können beispielsweise ein gesammelter Datensatz zu einer Identität sein, in dem hinterlegt ist, wann die Identität das System benutzt hat. Das Zur-Verfügung-Stellen der Vergleichsdaten vereinfacht die Bestimmung des normalen Verhaltens bzw. von abweichenden Anomalien für jede einzelne Sicherheitseinrichtung des Systems.

Gemäß einer weiteren vorteilhaften Ausgestaltung wird ein Ereignis der Anomalie-Erkennung unabhängig von den Berechtigungen lokal von der jeweiligen Sicherheitseinrichtung gespeichert.

Jede Identität kann, wie oben bereits beschrieben, zu ihrer Identität Berechtigungen hinterlegen, die bestimmen können, wie weit und in welcher Art und Weise die personenbezogenen Daten, die dieser Identität zugeordnet sind, verwertet werden dürfen. Unabhängig von diesen Berechtigungen können Daten zu einer Anomalie separat verwertet werden. Beispielsweise wird erfasst, dass eine Anomalie stattgefunden hat. Hierbei werden die Daten zu diesem Anomalie-Ereignis unabhängig von den personenbezogenen Daten abgespeichert. Dies kann bei schwerwiegenden Vergehen zur Aufklärung des Sachverhalts beitragen.

Gemäß dem zweiten Aspekt wird die Erfindung durch ein Verfahren zum Verwalten von personenbezogenen Daten gemäß Anspruch 11 gelöst. Das Verfahren umfasst die Schritte:
Erfassen von personenbezogenen Daten durch eine erste Sicherheitseinrichtung oder eine zweite Sicherheitseinrichtung, die räumlich getrennt angeordnet sind;
Zuordnen der erfassten personenbezogenen Daten zu einer Identität;
Anonymisieren der erfassten personenbezogenen Daten durch die Sicherheitseinrichtung, die die personenbezogenen Daten erfasst hat;
Überprüfen einer von einem Verwaltungssystem verwalteten Berechtigung zu der zugeordneten Identität, wobei durch eine Person die Berechtigungen ihrer zugehörigen Identität vergebbar und hinterlegbar sind, wobei die Berechtigung von der Identität bestimmt wurde;
Speichern der personenbezogenen Daten lokal an der Sicherheitseinrichtung, die die personenbezogenen Daten erfasst hat, wenn die Überprüfung der Berechtigung positiv war.

Gemäß einem zweiten Aspekt wird die Erfindung durch ein Computerprogrammprodukt mit einem Programmcode zum Ausführen des Verfahrens der oben beschriebenen Art gelöst, wenn der Programmcode auf einem Computersystem ausgeführt wird.

Im Folgenden wird die Erfindung anhand von weiteren Ausführungsbeispielen und den Figuren näher erläutert. Es zeigen:
- Fig. 1: eine schematische Darstellung einer Anonymisierung von personenbezogenen Daten;
- Fig. 2: eine schematische Darstellung eines erfindungsgemäßen Systems
- Fig. 3: eine schematische Darstellung zur Verwaltung von personenbezogenen Daten gemäß einer Ausgestaltung der Erfindung;
- Fig. 4: eine weitere schematische Darstellung zur Verwaltung von personenbezogenen Daten gemäß einer Ausgestaltung der Erfindung;
- Fig. 5: eine weitere schematische Darstellung zur Verwaltung von personenbezogenen Daten gemäß einer Ausgestaltung der Erfindung; und
- Fig. 6: ein schematisches Flussdiagramm eines Verfahrens gemäß einer Ausgestaltung der Erfindung.

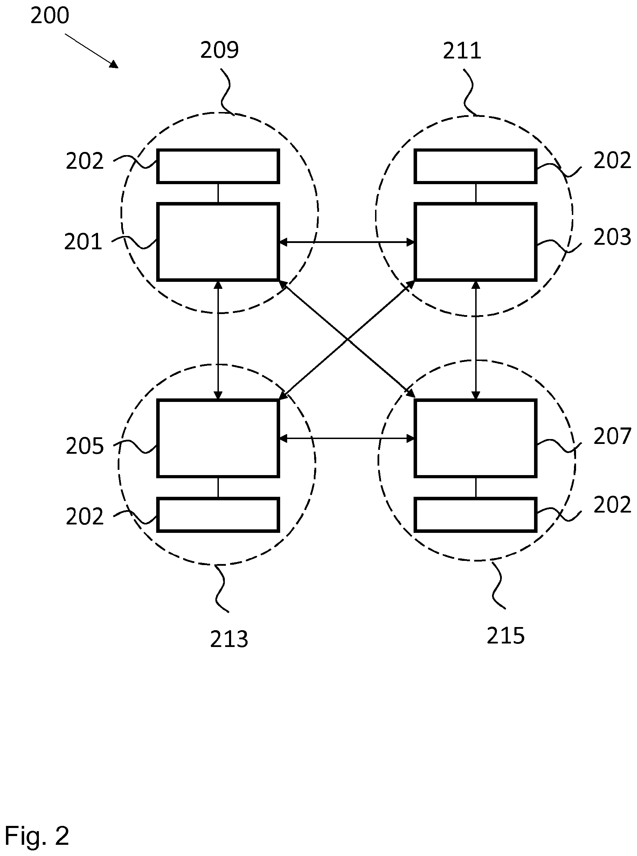

Fig. 2 zeigt ein System 200. Bei dem System 200 handelt es sich in dem gezeigten Ausführungsbeispiel um eine Sicherheitsschleuse. Das System 200 ist über vier unterschiedliche Standorte 209, 211, 213, 215 an verschiedenen Eingängen eines zu sichernden Gebäudes angeordnet. Bei dem Gebäude handelt es sich um ein Bürogebäude, das mehrere Eingänge aufweist und an jedem Eingang ist eine Sicherheitseinrichtung 201, 203, 205, 207 angeordnet. Das System 200 weist eine erste Sicherheitseinrichtung 201 am Standort 209 auf. Das System 200 weist des Weiteren eine zweite Sicherheitseinrichtung 203 am Standort 211, eine dritte Sicherheitseinrichtung 205 am Standort 213 und eine vierte Sicherheitseinrichtung 207 am Standort 215 auf.

Das System 200 ist dazu eingerichtet, Personen zu authentifizieren und so eine Sicherheit für den zu schützenden Bereich, also das Gebäude, zu gewährleisten. Hierzu ist jeder Person eine Identität zugeordnet, die Datensätze der Person umfasst, wie beispielsweise ein Personenname und/oder eine Personalnummer. Im Folgenden kann sich die Person in dem System 200 authentifizieren, wobei die hierbei anfallenden personenbezogenen Daten anonymisiert der Identität zugeordnet werden, so dass Dritte aus den gespeicherten Daten nicht ohne Weiteres in Erfahrung bringen können, zu welcher Person die Identität gehört.

Die Sicherheitseinrichtungen 201, 203, 205, 207 weisen jeweils eine Erfassungsvorrichtung auf, die dazu eingerichtet ist, personenbezogene Merkmale zu erfassen. Die Sicherheitseinrichtungen 201, 203, 205, 207 umfassen des Weiteren Kommunikationsmittel, um mit den anderen Sicherheitseinrichtungen 201, 203, 205, 207, aber auch weiteren Computersystemen, wie einem zentralen Server, der in Fig. 2 nicht gezeigt ist, zu kommunizieren. In weiteren Ausgestaltungen kann das System 200 zwei, drei oder auch mehr als vier Sicherheitseinrichtungen 201, 203, 205, 207 aufweisen. Jede der Sicherheitseinrichtungen 201, 203, 205, 207 weist einen lokalen Speicher (aus Gründen der Übersichtlichkeit in Fig. 2 nicht gezeigt) auf, d. h. einen Speicher, der an dem räumlichen Ort angeordnet ist, an dem auch die jeweilige zu dem Speicher gehörige Sicherheitseinrichtung 201, 203, 205, 207 angeordnet ist.

Die Sicherheitseinrichtungen 201, 203, 205, 207 können miteinander kommunizieren, d. h. Daten über ein Datennetzwerk austauschen. Das Datennetzwerk kann hierbei ein LAN- oder WAN-Netzwerk sein, aber auch das Internet umfassen oder anders eingerichtet sein.

Jede Sicherheitseinrichtung 201, 203, 205, 207 weist ein Verwaltungssystem 202 auf. In dem gezeigten Ausführungsbeispiel ist auf jeder Sicherheitseinrichtung 201, 203, 205, 207 an jedem Standort 209, 211, 213, 215 ein Verwaltungssystem 202 installiert. In einer alternativen Ausgestaltung ist das Verwaltungssystem 202 an einem zentralen Ort, wie beispielsweise einem Server, installiert und über das Datennetzwerk mit den einzelnen Sicherheitseinrichtungen 201, 203, 205, 207 verbunden. In einer weiteren alternativen Ausgestaltung ist das Verwaltungssystem 202 lediglich auf der ersten Sicherheitseinrichtung 201 angeordnet und über das Datennetzwerk mit den restlichen Sicherheitseinrichtungen 203, 205, 207 verbunden.

Im gezeigten Ausführungsbeispiel handelt es sich bei dem Verwaltungssystem 202 um ein Softwaremodul, die auf einem Computersystem ausführbar ist, hier auf den einzelnen Sicherheitseinrichtungen 201, 203, 205, 207 ausgeführt wird. In einer alternativen Ausgestaltung kann es sich aber auch um eine andere Implementierung handeln, die dazu eingerichtet ist Informationen zu personenbezogenen Daten zu verwalten, wie beispielsweise eine Hardware-Implementierung.

Das Verwaltungssystem 202 ist so eingerichtet, dass personenbezogene Daten einer Identität zugeordnet werden können, und Personen, die zu der Identität gehören, Berechtigungen über die personenbezogenen Daten ihrer Identität separat und individuell verwalten können. D. h., eine Person, die sich in dem System 200 registriert und eine Identität besitzt, kann zu ihrer Identität bezüglich ihrer personenbezogenen Daten Berechtigungen hinterlegen. Eine solche Berechtigung kann umfassen, welche Sicherheitseinrichtung 201, 203, 205, 207 was mit den personenbezogenen Daten machen darf. Die Berechtigungen können auch umfassen, wie weitere Computersysteme mit Zugriff auf das System 200, aber auch wie andere Identitäten und Prozesse des Systems 200 mit den personenbezogenen Daten umgehen dürfen. Beispielsweise kann die Person eine Berechtigung zum lokalen Speichern der personenbezogenen Daten auf der ersten Sicherheitseinrichtung 201 erteilen. Weitere Berechtigungen, die vergeben werden können, sind beispielsweise eine Freigabe zum Weiterleiten der personenbezogenen Daten, um sie zentral oder dezentral zu verarbeiten. Eine solche Freigabe kann allgemein erfolgen, aber auch speziell für ausgewählte andere Identitäten. Eine solche ausgewählte andere Identität kann beispielsweise ein Arbeitskollege, ein Personalchef oder ein Administrator des Systems 200 aber auch ein Prozess des Systems 200 sein.

Jeder Standort 209, 211, 213, 215 mit einer Sicherheitseinrichtung 201, 203, 205, 207 und dem Verwaltungssystem 202, ist mit wenigstens einem anderen Standort 209, 211, 213, 215, insbesondere mit allen anderen Standorten 209, 211, 213, 215 und somit mit allen anderen Sicherheitseinrichtung 201, 203, 205, 207 über ein Datennetzwerk verbunden. Jeder Standort 209, 211, 213, 215 speichert die personenbezogenen Daten, die an diesem Standort 209, 211, 213, 215 erfasst wurden, lokal.

Ein Übersenden der personenbezogenen Daten von einer Sicherheitseinrichtung 201, 203, 205, 207 an ein anderes Computersystem, wie eine andere Sicherheitseinrichtung 201, 203, 205, 207, kann nur dann erfolgen, wenn eine Berechtigung in dem Verwaltungssystem 202 vorliegt, die es der Sicherheitseinrichtung 201, 203, 205, 207 gestattet, diese personenbezogenen Daten weiterzugeben.

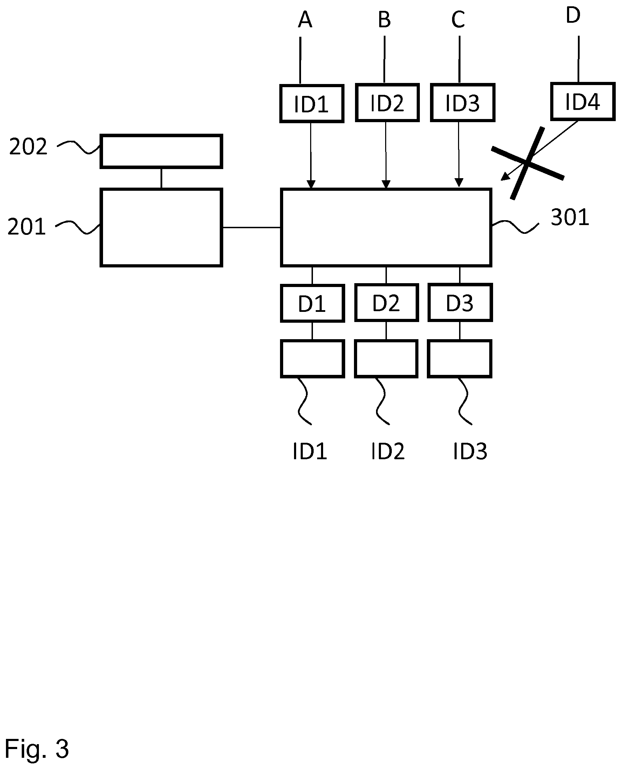

Fig. 3 zeigt eine schematische Darstellung der ersten Sicherheitseinrichtung 201 mit dem Verwaltungssystem 202 und einem lokalen Speicher 301 an dem ersten Standort 209. Die erste Sicherheitseinrichtung 201 weist hierbei das Verwaltungssystem 202 auf. In einer weiteren Ausgestaltung ist die erste Sicherheitseinrichtung 201 lediglich mit dem Verwaltungssystem 202 über eine Datenverbindung verbunden und das Verwaltungssystem 202 wird an einem anderen Ort ausgeführt.

Die erste Sicherheitseinrichtung 201 ist dazu eingerichtet, personenbezogene Daten D1, D2, D3 zu erfassen. Die Erfassung der personenbezogenen Daten D1, D2, D3 erfolgt durch Auslesen eines elektronischen Chips, insbesondere eines Tokens, durch Erfassen von biometrischen Daten, wie einem Iris-Scan oder einem Handvenenmuster. Zusätzlich kann ein Erfassen die Erfassung einer alphanumerischen Zeichenfolge, aber auch das Erfassen eines analogen Ausweisdokuments umfassen.

Die erfassten personenbezogenen Daten D1, D2, D3 werden lokal durch die erste Sicherheitseinrichtung 201 mit weiteren Protokolldaten versehen, wie beispielsweise einem Zeitpunkt oder dem Standort 209, die darauf rückschließen lassen, wann, wo und gegebenenfalls unter welchen Bedingungen die personenbezogenen Daten D1, D2, D3 erfasst wurden.

Die erste Sicherheitseinrichtung 201 anonymisiert die erfassten personenbezogenen Daten D1, D2, D3 lokal und ordnet diese einer Identität zu. Zu jeder Identität gehört eine Person oder ein Prozess. Im Ausführungsbeispiel gehört die Identität ID1 zu einer Person A. Die Identität ID2 gehört zu einer Person B, die Identität ID1 gehört zu einer Person C und die Identität ID4 gehört zu einer Person D. Lässt die Person A ihre personenbezogenen Daten D1 durch die erste Sicherheitseinrichtung 201 erfassen, so speichert die erste Sicherheitseinrichtung 201 die erfassten personenbezogenen Daten D1 zusammen mit dem Zeitpunkt und dem Standort 209 in einem Datensatz D1. Der Datensatz D1 wird der Identität ID1 zugeordnet und lokal in dem Speicher 301 abgelegt.

Die Speicherung dieses Datensatzes D1, der die personenbezogenen Daten umfasst, erfolgt jedoch nur, wenn in dem Verwaltungssystem 202 von der Identität ID1 eine Berechtigung zum Speichern personenbezogener Daten D, die der Identität ID1 zugeordnet sind, vorliegt. Im Ausführungsbeispiel, wie in Fig. 3 gezeigt, haben die Identitäten ID1, ID2 und ID3 jeweils eine Berechtigung zum Speichern personenbezogener Daten D1, D2, D3, die die jeweilige Identität ID1, ID2, ID3 betreffen, hinterlegt. Erfasst die erste Sicherheitseinrichtung 201 eben diese personenbezogenen Daten D1, D2, D3, so werden sie in dem Speicher 301 als Datensätze jeweils als zu der entsprechenden Identität ID1, ID2 oder ID3 gehörend lokal gespeichert.

Eine vierte Identität ID4 hat keine Berechtigung zum Speichern personenbezogener Daten, die der Identität ID4 zugeordnet sind, gegeben. Die erste Sicherheitseinrichtung 201 erfasst die personenbezogenen Daten und ordnet diese personenbezogenen Daten einer Identität zu. In diesem Fall werden die personenbezogenen Daten der Identität ID4 zugeordnet. Die erste Sicherheitseinrichtung 201 erfährt durch einen Abgleich mit dem Verwaltungssystem 202, dass die Identität ID4 keine Berechtigung zum Speichern der personenbezogenen Daten, die der Identität ID4 zugeordnet werden, gegeben hat. Die erste Sicherheitseinrichtung 201 speichert die personenbezogenen Daten zu der Identität ID4 nicht. Bevor die personenbezogenen Daten zur Identität ID4 verworfen werden, wird jedoch noch eine Anomalie-Detektion durchgeführt. In einer alternativen Ausgestaltung wird auf diese Anomalie-Detektion verzichtet.

Als eine Anomalie wird jedes Ereignis, insbesondere jedes Authentifizierungsereignis, angesehen, das eine außergewöhnliche Charakteristik hat. Beispielsweise handelt es sich bei einer Anomalie um das Erfassen von personenbezogenen Daten D1, D2, D3 zu einer unüblichen Uhrzeit. In dem gezeigten Ausführungsbeispiel ist das System 200 in einem Bürogebäude installiert. Typischer Arbeitszeiten in einem Bürogebäude sind von 7 Uhr früh bis 18 Uhr abends. Werden personenbezogene Daten D1, D2, D3 nun um 21 Uhr an einem Samstagabend erfasst, so ist dies unüblich und eine Anomalie liegt vor.

Zu jeder Identität wird ein Personenprofil aus den erfassten personenbezogenen Daten D1, D2, D3 erstellt, beispielsweise zur Identität ID1 ein erstes Erfassen personenbezogener Daten D1 an jedem Werktag um 7:30 Uhr und ein zweites Erfassen personenbezogener Daten D1 um 18:15 Uhr. Dies kann als Mittelwert über einen längeren Zeitraum erfasst werden. Kommt die Person A zur Identität ID1 abweichend von diesen Uhrzeiten, also abweichend von ihrem ermittelten Personenprofil, so wird wiederum eine Anomalie detektiert. In einer alternativen Ausgestaltung wird kein Personenprofil ermittelt.

Im beschriebenen Ausführungsbeispiel werden zwar die personenbezogenen Daten, die der Identität ID4 zugeordnet werden können, nicht gespeichert, jedoch wird ein Datensatz gespeichert, der Informationen dazu enthält, ob der Abgleich der personenbezogenen Daten, die der Identität ID4 zugeordnet werden, einer Anomalie zuzuordnen ist, oder nicht. Dies erfolgt ohne eine Zuordnung der Anomaliedaten zur Identität ID4. Alternativ erfolgt eine Zuordnung zur entsprechenden Identität

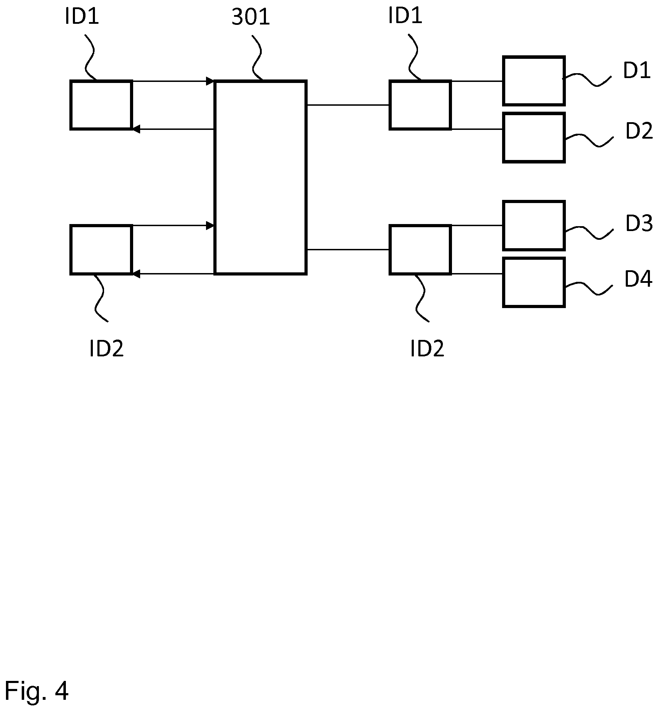

In Fig. 4 ist eine schematische Darstellung zur Verwaltung von Berechtigungen und Identitäten dargestellt. In dem Speicher 301 sind zu der ersten Identität ID1 zwei Datensätze mit personenbezogenen Daten D1 und D2 gespeichert. In dem Speicher 301 sind des Weiteren zu der zweiten Identität ID2 zwei Datensätze mit personenbezogenen Daten D3 und D4 gespeichert. Die Datensätze umfassen personenbezogene Daten D1, D2, D3, D4, zu denen die jeweilige Identität ID1, ID2 Berechtigungen im Verwaltungssystem 202 hinterlegt hat. In dieser Ausgestaltung umfassen die Berechtigungen das Speichern der personenbezogenen Daten D1, D2, D3, D4 in dem Speicher 301, der eine sichere und vertrauenswürdige Umgebung ist. Die personenbezogenen Daten D1, D2, D3, D4 dürfen jedoch lediglich von den Identitäten gelesen werden, denen die personenbezogenen Daten D1, D2, D3, D4 jeweils zugeordnet sind. Stellt die erste Identität D1 eine Anfrage, alle personenbezogenen Daten zu lesen (Pfeil von ID1 zum Speicher 301), so werden der Identität ID1 nur diejenigen personenbezogenen Daten präsentiert (Pfeil vom Speicher 301 zu ID1), die auch dieser Identität ID1 zugeordnet sind. D. h., wenn die Identität ID1 alle personenbezogenen Daten sehen will, so werden der Identität ID1 lediglich die personenbezogenen Daten D1 und D2 angezeigt.

Stellt hingegen die Identität ID2 eine Anfrage, alle personenbezogenen Daten anzusehen (Pfeil von ID2 zum Speicher 301), so werden dieser, entsprechend wie zu Identität ID1, lediglich die der Identität ID2 zugeordneten personenbezogenen Daten angezeigt (Pfeil vom Speicher 301 zu ID2). Dies sind hierbei die Datensätze D3 und D4.

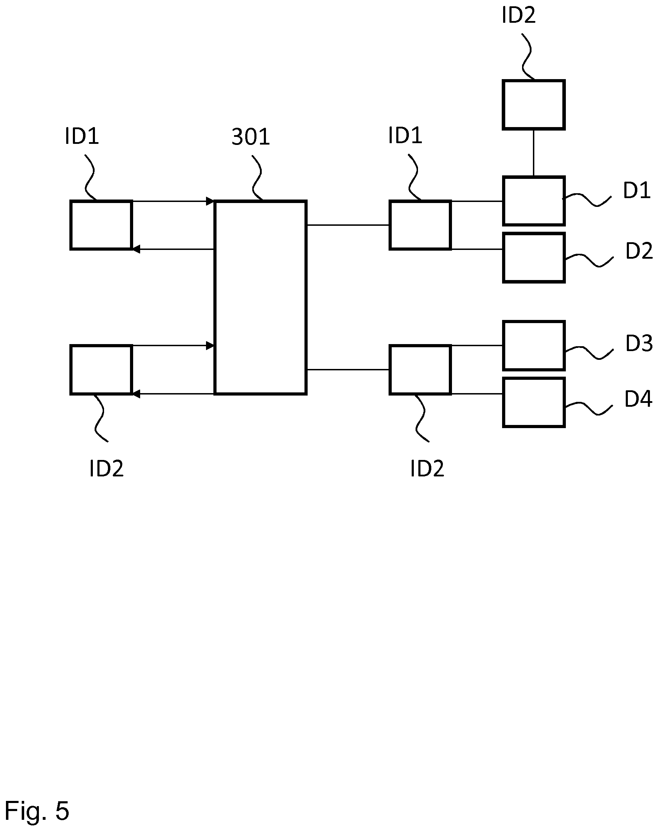

Fig. 5 zeigt eine schematische Darstellung zur Verwaltung von Berechtigungen und Identitäten entsprechend der Darstellung aus Fig. 4, wobei die erste Identität ID1 der zweiten Identität ID2 die Berechtigung erteilt hat, den Datensatz mit den personenbezogenen Daten D1 zu lesen und zu verarbeiten. Der Speicher 301 hat, wie zu Fig. 4 beschrieben, zu den Identitäten ID1 und ID2 jeweils die Datensätze D1 und D2 sowie D3 und D4 gespeichert. Zu dem Datensatz mit den personenbezogenen Daten D1 ist des Weiteren vermerkt, dass die Identität ID2 die personenbezogenen Daten D1 lesen bzw. auswerten darf. Diese Berechtigung wird von dem Verwaltungssystem 202 verwaltet. Stellt die Identität ID1 nun eine Anfrage, alle Daten zu lesen, so werden dieser Identität ID1, wie zu Fig. 4 beschrieben, lediglich die Datensätze D1 und D2 angezeigt, die zu der Identität ID1 zugeordnet sind, da die Identität ID1 keine besonderen Berechtigungen hat. Stellt hingegen die Identität ID2 eine Anfrage, alle personenbezogenen Daten D1, D2, D3, D4 zu sehen, so werden ihr, wie zu Fig. 4 beschrieben, die Datensätze mit den personenbezogenen Daten D3 und D4 angezeigt, die der Identität ID2 zugeordnet sind, und zusätzlich der Datensatz mit den personenbezogenen Daten D1 angezeigt, zu dem eine Berechtigung für die Identität ID2 vorliegt.

Die anderen Sicherheitseinrichtungen 203, 205, 207 sind ebenso eingerichtet, wie die erste Sicherheitseinrichtung 201, wie oben erläutert.

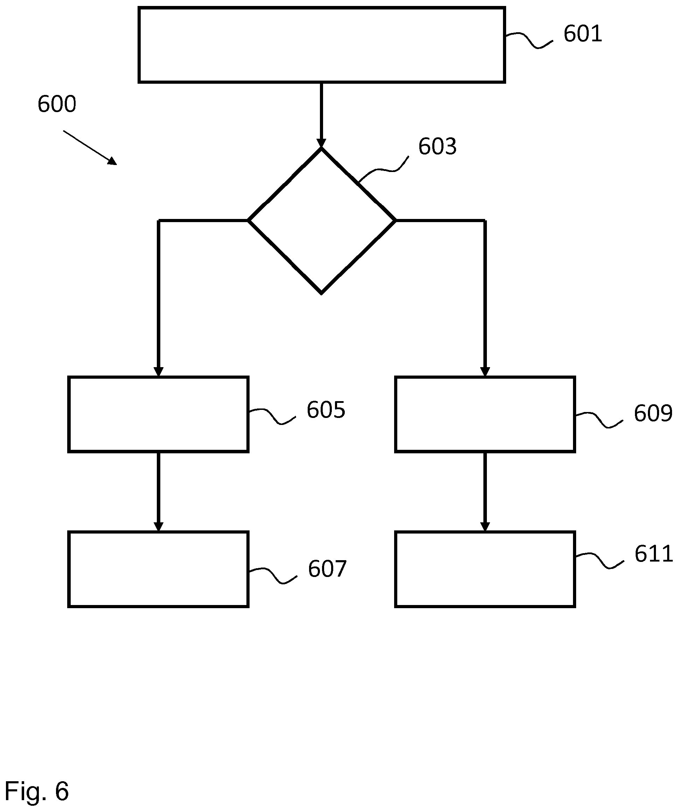

Fig. 6 zeigt en Flussdiagramm 600 für ein Verfahren gemäß einer Ausgestaltung der Erfindung. In einem ersten Schritt 601 werden personenbezogene Daten D1, D2, D3, D4 erfasst. Hierbei werden die personenbezogenen Daten D von der ersten Sicherheitseinrichtung 201 erfasst. Die erste Sicherheitseinrichtung 201, die die personenbezogenen Daten D1, D2, D3, D4 im Schritt 601 erfasst hat, ordnet die erfassten personenbezogenen Daten D1, D2, D3, D4 einer Identität ID1, ID2, ID3, ID4 zu. Die erfassten personenbezogenen Daten D1, D2, D3, D4 werden von der ersten Sicherheitseinrichtung 201, die die personenbezogenen Daten D1, D2, D3, D4 erfasst hat, anonymisiert.

Im Schritt 602 überprüft die erste Sicherheitseinrichtung 201, die die personenbezogenen Daten D1, D2, D3, D4 erfasst hat, ob eine Berechtigung zum Speichern der erfassten personenbezogenen Daten D1, D2, D3, D4 vorliegt. Hierzu stellt sie eine Anfrage an das Verwaltungssystem 202, ob zu der Identität ID1, ID2, ID3, ID4, der die personenbezogenen Daten D1, D2, D3, D4 im Schritt 601 zugeordnet wurden, eine Berechtigung zum Speichern von Daten vorliegt.

Liegt keine Berechtigung zum Speichern der erfassten personenbezogenen Daten D1, D2, D3, D4 vor, so findet im Schritt 605 eine Anomalie-Detektion statt. Hierzu wird zu den erfassten personenbezogenen Daten D1, D2, D3, D4, wie oben beschrieben, überprüft, ob es sich um eine Anomalie handelt. Bei einer Anomalie kann es sich um einen groben Sicherheitsverstoß oder ein ungewöhnliches Verhalten eines Benutzers oder um ungültige personenbezogene Daten handeln. Die Anomalie-Detektion kann positiv oder negativ ausfallen. Das Ergebnis der Anomalie-Detektion wird gespeichert, wobei das gespeicherte Ergebnis der Anomalie-Detektion keiner Identität ID1, ID2, ID3, ID4 zugeordnet wird. In einer alternativen Ausgestaltung wird das Ergebnis der Anomalie-Detektion der Identität ID1, ID2, ID3, ID4 zugeordnet, der die personenbezogenen Daten D1, D2, D3, D4 zugeordnet werden konnten.

Die erfassten personenbezogenen Daten D1, D2, D3, D4, mit deren Hilfe die Anomalie-Detektion durchgeführt wurde, werden im Schritt 607 hingegen gelöscht. Somit werden keine personenbezogenen Daten D1, D2, D3, D4 zu der Identität ID4 gespeichert, die eine Speicherung von personenbezogenen Daten ID4 untersagt hat. Es werden lediglich die Informationen zu einer Anomalie-Detektion gespeichert, um beispielsweise bei einem schweren Vergehen später eine Aufschlüsselung und eine Rückverfolgung des Zeitpunkts und der Erkennung des Erfassungsortes möglich zu machen.

War die Berechtigungsabfrage im Schritt 603 positiv, d. h. hat die Identität ID1, ID2, ID3, der die erfassten personenbezogenen Daten D1, D2, D3, D4 zugeordnet wurden, eine Berechtigung zum Speichern ihrer erfassten personenbezogenen Daten D1, D2, D3, D4 hinterlegt, so werden die Daten im Schritt 609 in dem Speicher 301 zu der Identität ID1, ID2, ID3 abgespeichert, der die erfassten personenbezogenen Daten D1, D2, D3, D4 zugeordnet wurden. Die personenbezogenen Daten D1, D2, D3, D4 können anschließend im Schritt 611 analysiert werden. Beispielsweise kann eine Analyse einen Vergleich aller bisherigen erfassten personenbezogenen Daten D1, D2, D3, D4 auf ihre Zeitpunkte sein, so dass ein Personenprofil erstellt werden kann.

### Bezugszeichenliste

- 100, 110: Block
- 200: System
- 201, 203, 205, 207: Sicherheitseinrichtung
- 202: Verwaltungssystem
- 209, 211, 213, 215: Standort
- 301: Speicher
- D1, D2, D3, D4: personenbezogene Daten
- ID1, ID2, ID3, ID4: Identität
- 600: Flussdiagramm
- 601-611: Verfahrensschritt
- A, B, C, D: Person

## Patentansprüche

1. System (200) zum Verwalten von personenbezogenen Daten (D1, D2, D3, D4) mit:
einer ersten Sicherheitseinrichtung (201) und einer zweiten Sicherheitseinrichtung (203), die räumlich getrennt angeordnet sind und die jeweils dazu eingerichtet sind, personenbezogene Daten (D1, D2, D3, D4) zu erfassen und die erfassten personenbezogenen Daten (D1, D2, D3, D4) Identitäten (ID1, ID2, ID3, ID4) zuzuordnen; und
einem Verwaltungssystem (202), das dazu eingerichtet ist, von den Identitäten (ID1, ID2, ID3, ID4) bestimmte Berechtigungen zu den Identitäten (ID1, ID2, ID3, ID4) zu verwalten, wobei durch eine Person die Berechtigungen ihrer zugehörigen Identität (ID1, ID2, ID3, ID4) vergebbar und hinterlegbar sind;
wobei die erste Sicherheitseinrichtung (201) und die zweite Sicherheitseinrichtung (203) jeweils die erfassten personenbezogenen Daten (D1, D2, D3, D4) anonymisieren und einen Zugriff auf die personenbezogenen Daten (D1, D2, D3, D4) zulassen, wenn eine Berechtigung zum Zugriff auf personenbezogene Daten (D1, D2, D3, D4) vorliegt, die der Identität (ID1, ID2, ID3, ID4) zugeordnet ist, die den personenbezogenen Daten (D1, D2, D3, D4) zugeordnet ist,
wobei die erste Sicherheitseinrichtung (201) und die zweite Sicherheitseinrichtung (203) jeweils die personenbezogenen Daten (D1, D2, D3, D4) in Abhängigkeit der verwalteten Berechtigungen lokal speichern, wenn in dem Verwaltungssystem (202) von der Identität (ID1, ID2, ID3, ID4), welcher die Berechtigung zugeordnet ist, eine Berechtigung zum Speichern personenbezogener Daten vorliegt,
wobei das Verwaltungssystem (202) dazu eingerichtet ist, Informationen über die Berechtigungen der ersten Sicherheitseinrichtung (201) und der zweiten Sicherheitseinrichtung (203) bereitzustellen,
wobei eine Auswertung der personenbezogenen Daten (D1, D2, D3, D4) in Abhängigkeit der verwalteten Berechtigungen erfolgt.

2. System (200) nach Anspruch 1, wobei die erste Sicherheitseinrichtung (201) und die zweite Sicherheitseinrichtung (203) mit einem Datennetzwerk verbunden sind und dazu eingerichtet sind, personenbezogene Daten (D1, D2, D3, D4) in Abhängigkeit der verwalteten Berechtigungen für einen Zugriff über das Datennetzwerk bereitzustellen.

3. System (200) nach einem der vorhergehenden Ansprüche, wobei die Berechtigungen Rechte zum Speichern und/oder Freigeben der personenbezogenen Daten (D1, D2, D3, D4) umfassen.

4. System (200) nach einem der vorhergehenden Ansprüche, wobei das Verwaltungssystem (202) dazu eingerichtet ist, Informationen über die Berechtigungen vorbestimmten Identitäten (ID1, ID2, ID3, ID4) bereitzustellen.

5. System (200) nach einem der vorhergehenden Ansprüche, wobei das Verwaltungssystem (202) dazu eingerichtet ist, die Berechtigungen basierend auf einer Erlaubnis einer Identität (ID1, ID2, ID3, ID4) zu verwalten.

6. System (200) nach einem der vorhergehenden Ansprüche, wobei das Verwaltungssystem (202) auf der ersten Sicherheitseinrichtung (201) und der zweiten Sicherheitseinrichtung (203) ausgeführt wird.

7. System (200) nach einem der Ansprüche 1 bis 5, wobei das Verwaltungssystem (202) auf einem Computersystem ausgeführt wird, das von der ersten Sicherheitseinrichtung (201) und/oder der zweiten Sicherheitseinrichtung (203) verschieden ist und mit der ersten Sicherheitseinrichtung (201) und der zweiten Sicherheitseinrichtung (203) über eine Datennetzwerkverbindung verbunden ist.

8. System (200) nach einem der vorhergehenden Ansprüche, wobei die erste Sicherheitseinrichtung (201) und die zweite Sicherheitseinrichtung (203) jeweils dazu eingerichtet sind, ein normales Verhalten einer Person (A, B, C, D) anhand der ihrer Identität zugeordneten erfassten personenbezogenen Daten (D1, D2, D3, D4) und hiervon abweichende Anomalien zu erkennen.

9. System (200) nach Anspruch 8, wobei eine Anomalie anhand von Vergleichsdaten bestimmbar ist, die der jeweiligen Sicherheitseinrichtung (201, 203) lokal oder über eine Datennetzwerkverbindung zu Verfügung stehen.

10. System nach Anspruch 8 oder 9, wobei ein Ergebnis der Anomalieerkennung unabhängig von den Berechtigungen lokal von der jeweiligen Sicherheitseinrichtung (201, 203) gespeichert wird.

11. Verfahren zum Verwalten von personenbezogenen Daten (D1, D2, D3, D4), umfassend die Schritte:
Erfassen von personenbezogenen Daten (D1, D2, D3, D4) durch eine erste Sicherheitseinrichtung (201) oder eine zweite Sicherheitseinrichtung (203), die räumlich getrennt angeordnet sind;
Zuordnen der erfassten personenbezogenen Daten (D1, D2, D3, D4) zu einer Identität (ID1, ID2, ID3, ID4);
Anonymisieren der erfassten personenbezogenen Daten (D1, D2, D3, D4) durch die Sicherheitseinrichtung (201, 203), die die personenbezogenen Daten (D1, D2, D3, D4) erfasst hat;
Überprüfen einer von einem Verwaltungssystem (202) verwalteten Berechtigung zu der zugeordneten Identität (ID1, ID2, ID3, ID4), wobei durch eine Person die Berechtigungen ihrer zugehörigen Identität (ID1, ID2, ID3, ID4) vergebbar und
hinterlegbar sind, wobei die Berechtigung von der Identität (ID1, ID2, ID3, ID4) bestimmt wurde;
Speichern der personenbezogenen Daten (D1, D2, D3, D4) lokal an der Sicherheitseinrichtung (201, 203), die die personenbezogenen Daten (D1, D2, D3, D4) erfasst hat, wenn die Überprüfung der Berechtigung positiv war,
wobei die erste Sicherheitseinrichtung (201) und die zweite Sicherheitseinrichtung (203) jeweils die personenbezogenen Daten (D1, D2, D3, D4) in Abhängigkeit der verwalteten Berechtigungen lokal speichern, wenn in dem Verwaltungssystem (202) von der Identität (ID1, ID2, ID3, ID4), welcher die Berechtigung zugeordnet ist, eine Berechtigung zum Speichern personenbezogener Daten vorliegt,
wobei das Verwaltungssystem (202) Informationen über die Berechtigungen der ersten Sicherheitseinrichtung (201) und der zweiten Sicherheitseinrichtung (203) bereitstellt,
wobei eine Auswertung der personenbezogenen Daten (D1, D2, D3, D4) in Abhängigkeit der verwalteten Berechtigungen erfolgt.

12. Computer-Programm-Produkt mit einem Programmcode zur Ausführung des Verfahrens nach Anspruch 11, wenn der Programmcode auf einem System nach einem der Ansprüche 1 bis 10 ausgeführt wird.

## Claims

1. System (200) for managing personal data (D1, D2, D3, D4), comprising:
a first security device (201) and a second security device (203), which are arranged in a spatially separated manner and which are each configured to capture personal data (D1, D2, D3, D4) and to assign the captured personal data (D1, D2, D3, D4) to identities (ID1, ID2, ID3, ID4); and
a management system (202), which is configured to manage authorizations for the identities (ID1, ID2, ID3, ID4), the authorizations determined by the identities (ID1, ID2, ID3, ID4), wherein a person can grant and deposit the authorizations of their assigned identity (ID1, ID2, ID3, ID4);
wherein the first security device (201) and the second security device (203) each anonymize the captured personal data (D1, D2, D3, D4) and allow access to the personal data (D1, D2, D3, D4) if an authorization to access personal data (D1, D2, D3, D4) is present, which authorization is assigned to the identity (ID1, ID2, ID3, ID4), which is assigned to the personal data (D1, D2, D3, D4),
wherein the first security device (201) and the second security device (203) each store the personal data (D1, D2, D3, D4) locally depending on the managed authorizations, if an authorization to store personal data for the identity (ID1, ID2, ID3, ID4), to which the authorization is assigned, is present in the management system (202),
wherein the management system (202) is configured to provide information about the authorizations of the first security device (201) and the second security device (203),
wherein an evaluation of the personal data (D1, D2, D3, D4) is carried out depending on the managed authorizations.

2. System (200) according to claim 1, wherein the first security device (201) and the second security device (203) are connected to a data network and are configured to provide personal data (D1, D2, D3, D4) for access via the data network depending on the managed authorizations.

3. System (200) according to of the preceding claims, wherein the authorizations comprise rights to store and/or release the personal data (D1, D2, D3, D4).

4. System (200) according to one of the preceding claims, wherein the management system (202) is configured to provide information about the authorizations of predetermined identities (ID1, ID2, ID3, ID4).

5. System (200) according to one of the preceding claims, wherein the management system (202) is configured to manage the authorizations based on a permission of an identity (ID1, ID2, ID3, ID4).

6. System (200) according to one of the preceding claims, wherein the management system (202) is executed on the first security device (201) and the second security device (203).

7. System (200) according to one of claims 1 to 5, wherein the management system (202) is executed on a computer system, which is different from the first security device (201) and/or the second security device (203) and is connected to the first security device (201) and the second security device (203) via a data network connection.

8. System (200) according to one of the preceding claims, wherein the first security device (201) and the second security device (203) are each configured to detect normal behavior of a person (A, B, C, D) based on the captured personal data (D1, D2, D3, D4) assigned to their identity and any anomalies deviating from this.

9. System (200) according to claim 8, wherein an anomaly can be determined using comparison data, which is available to the respective safety device (201, 203) locally or via a data network connection.

10. System according to claim 8 or 9, wherein a result of the anomaly detection is stored locally by the respective security device (201, 203) independently of the authorizations.

11. Method for managing personal data (D1, D2, D3, D4), comprising the following steps:
capturing personal data (D1, D2, D3, D4) by a first security device (201) or a second security device (203), which are arranged in a spatially separated manner;
assigning the captured personal data (D1, D2, D3, D4) to an identity (ID1, ID2, ID3, ID4);
anonymizing the captured personal data (D1, D2, D3, D4) by the security device (201, 203), which captured the personal data (D1, D2, D3, D4);
verifying an authorization managed by a management system (202) for the assigned identity (ID1, ID2, ID3, ID4), wherein the authorizations of their assigned identity (ID1, ID2, ID3, ID4) can be granted and deposited by a person, wherein the authorization was determined by the identity (ID1, ID2, ID3, ID4);
storing the personal data (D1, D2, D3, D4) locally at the security device (201, 203), which captured the personal data (D1, D2, D3, D4) if the verifying of the authorization was successful,
wherein the first security device (201) and the second security device (203) each store the personal data (D1, D2, D3, D4) locally depending on the managed authorizations, if an authorization to store personal data for the identity (ID1, ID2, ID3, ID4), to which the authorization is assigned, is present in the management system (202),
wherein the management system (202) provides information about the authorizations of the first security device (201) and the second security device (203),
wherein an evaluation of the personal data (D1, D2, D3, D4) is carried out depending on the managed authorizations.

12. Computer program product comprising program code for executing the method according to claim 11, wherein the program code is executed on a system according to one of claims 1 to 10.

## Revendications

1. Système (200) de gestion des données personnelles (D1, D2, D3, D4), comprenant :
un premier dispositif de sécurité (201) et un deuxième dispositif de sécurité (203), disposés de manière spatialement séparée et configurés chacun pour capturer des données personnelles (D1, D2, D3, D4) et pour attribuer les données personnelles capturées (D1, D2, D3, D4) à des identités (ID1, ID2, ID3, ID4) ; et
un système de gestion (202), configuré pour gérer les autorisations des identités (ID1, ID2, ID3, ID4), les autorisations déterminées par les identités (ID1, ID2, ID3, ID4), dans lequel une personne peut accorder et déposer les autorisations de son identité attribuée (ID1, ID2, ID3, ID4) ;
dans lequel le premier dispositif de sécurité (201) et le deuxième dispositif de sécurité (203) anonymisent chacun les données personnelles capturées (D1, D2, D3, D4) et permettent l'accès aux données personnelles (D1, D2, D3, D4) si une autorisation d'accès aux données personnelles (D1, D2, D3, D4) est présente, laquelle autorisation est attribuée à l'identité (ID1, ID2, ID3, ID4), qui est attribuée aux données personnelles (D1, D2, D3, D4),
dans lequel le premier dispositif de sécurité (201) et le deuxième dispositif de sécurité (203) stockent chacun localement les données personnelles (D1, D2, D3, D4) en fonction des autorisations gérées, si une autorisation de stocker des données personnelles pour l'identité (ID1, ID2, ID3, ID4) à laquelle l'autorisation est attribuée est présente dans le système de gestion (202),
dans lequel le système de gestion (202) est configuré pour fournir des informations sur les autorisations du premier dispositif de sécurité (201) et du deuxième dispositif de sécurité (203),
où une évaluation des données personnelles (D1, D2, D3, D4) est effectuée en fonction des autorisations gérées.

2. Système (200) selon la revendication 1, dans lequel le premier dispositif de sécurité (201) et le deuxième dispositif de sécurité (203) sont connectés à un réseau de données et sont configurés pour fournir des données personnelles (D1, D2, D3, D4) pour accès via le réseau de données en fonction des autorisations gérées.

3. Système (200) selon les revendications précédentes, dans lequel les autorisations comprennent des droits de stocker et/ou de diffuser les données personnelles (D1, D2, D3, D4).

4. Système (200) selon l'une des revendications précédentes, dans lequel le système de gestion (202) est configuré pour fournir des informations sur les autorisations d'identités prédéterminées (ID1, ID2, ID3, ID4).

5. Système (200) selon l'une des revendications précédentes, dans lequel le système de gestion (202) est configuré pour gérer les autorisations en fonction d'une permission d'une identité (ID1, ID2, ID3, ID4).

6. Système (200) selon l'une des revendications précédentes, dans lequel le système de gestion (202) est exécuté sur le premier dispositif de sécurité (201) et le deuxième dispositif de sécurité (203).

7. Système (200) selon l'une des revendications 1 à 5, dans lequel le système de gestion (202) est exécuté sur un système informatique, différent du premier dispositif de sécurité (201) et/ou du deuxième dispositif de sécurité (203), et connecté au premier dispositif de sécurité (201) et au deuxième dispositif de sécurité (203) via une connexion réseau de données.

8. Système (200) selon l'une des revendications précédentes, dans lequel le premier dispositif de sécurité (201) et le deuxième dispositif de sécurité (203) sont chacun configurés pour détecter le comportement normal d'une personne (A, B, C, D) sur la base des données personnelles capturées (D1, D2, D3, D4) attribuées à son identité et toute anomalie s'écartant de celle-ci.

9. Système (200) selon la revendication 8, dans lequel une anomalie peut être déterminée à l'aide de données de comparaison, disponibles localement ou via une connexion réseau de données pour le dispositif de sécurité respectif (201, 203).

10. Système selon la revendication 8 ou 9, dans lequel un résultat de la détection d'anomalie est stocké localement par le dispositif de sécurité respectif (201, 203) indépendamment des autorisations.

11. Méthode de gestion des données personnelles (D1, D2, D3, D4), comprenant les étapes suivantes :
capture de données personnelles (D1, D2, D3, D4) par un premier dispositif de sécurité (201) ou un deuxième dispositif de sécurité (203), qui sont disposés de manière spatialement séparée ;
attribution des données personnelles capturées (D1, D2, D3, D4) à une identité (ID1, ID2, ID3, ID4) ;
anonymiser les données personnelles capturées (D1, D2, D3, D4) par le dispositif de sécurité (201, 203), qui a capturé les données personnelles (D1, D2, D3, D4) ;
vérification d'une autorisation gérée par un système de gestion (202) pour l'identité attribuée (ID1, ID2, ID3, ID4), dans lequel les autorisations de leur identité attribuée (ID1, ID2, ID3, ID4) peuvent être accordées et déposées par une personne, dans lequel l'autorisation a été déterminée par l'identité (ID1, ID2, ID3, ID4) ;
le stockage local des données personnelles (D1, D2, D3, D4) sur le dispositif de sécurité (201, 203), qui a capturé les données personnelles (D1, D2, D3, D4) si la vérification de l'autorisation a réussi,
dans lequel le premier dispositif de sécurité (201) et le deuxième dispositif de sécurité (203) stockent chacun localement les données personnelles (D1, D2, D3, D4) en fonction des autorisations gérées, si une autorisation de stocker des données personnelles pour l'identité (ID1, ID2, ID3, ID4) à laquelle l'autorisation est attribuée est présente dans le système de gestion (202),
dans lequel le système de gestion (202) fournit des informations sur les autorisations du premier dispositif de sécurité (201) et du deuxième dispositif de sécurité (203),
où une évaluation des données personnelles (D1, D2, D3, D4) est effectuée en fonction des autorisations gérées.

12. Produit de programme informatique comprenant un code de programme pour exécuter la méthode selon la revendication 11, dans lequel le code de programme est exécuté sur un système selon l'une des revendications 1 à 10.
